# EUROPEAN PATENT SPECIFICATION

(11) **EP 4 581 532 B1**
(45) Date of publication and mention of the grant of the patent: **30.09.2026**
(21) Application number: 23761941.6
(22) Date of filing: 29.08.2023
(51) Int. Cl.: G06N 10/40

(54) **QUANTUM COMPUTING DEVICE, QUANTUM COMPUTING ARRANGEMENT, QUANTUM COMPUTER AND METHOD FOR OPERATING A QUANTUM COMPUTING DEVICE**
QUANTENCOMPUTERVORRICHTUNG, QUANTENCOMPUTERANORDNUNG, QUANTENCOMPUTER UND VERFAHREN ZUM BETRIEB EINER QUANTENCOMPUTERVORRICHTUNG
DISPOSITIF INFORMATIQUE QUANTIQUE, AGENCEMENT INFORMATIQUE QUANTIQUE, ORDINATEUR QUANTIQUE ET PROCÉDÉ DE FONCTIONNEMENT D'UN DISPOSITIF INFORMATIQUE QUANTIQUE

(30) Priority: 30.08.2022 DE 102022121870
(43) Date of publication of application: 09.07.2025
(73) Proprietor: eleQtron GmbH, 57072 Siegen (DE)
(72) Inventor: BOLDIN, Ivan, 57072 Siegen (DE); WUNDERLICH, Christof, 57076 Siegen (DE)
(74) Representative: Epping - Hermann - Fischer
(86) International application number: PCT/EP2023/073640
(87) International publication number: WO 2024/047027

(56) References cited:
- HENNING HAHN ET AL: "Integrated ^9Be^+ multi-qubit gate device for the ion-trap quantum computer", ARXIV.ORG, CORNELL UNIVERSITY LIBRARY, 201 OLIN LIBRARY CORNELL UNIVERSITY ITHACA, NY 14853, 19 February 2019 (2019-02-19), XP081493778, DOI: 10.1038/S41534-019-0184-5
- IVAN POGORELOV ET AL: "A compact ion-trap quantum computing demonstrator", ARXIV.ORG, CORNELL UNIVERSITY LIBRARY, 201 OLIN LIBRARY CORNELL UNIVERSITY ITHACA, NY 14853, 7 June 2021 (2021-06-07), XP081978758
- P. J. KUNERT ET AL: "A planar ion trap chip with integrated structures for an adjustable magnetic field gradient", APPLIED PHYSICS B, vol. 114, no. 1-2, 1 December 2013 (2013-12-01), Berlin/Heidelberg, pages 27 - 36, XP055312864, ISSN: 0946-2171, DOI: 10.1007/s00340-013-5722-9

## Description

The present disclosure relates to a quantum computing device, a quantum computing arrangement, a quantum computer and a method for operating a quantum computing device.

Document H. Hahn et al., "Integrated 9Be+ multi-qubit gate device for the ion-trap quantum computer", arxiv.org, Cornell University Library, 201 Olin Library Cornell University Ithaca, NY 14853, 19 February 2019, DOI: 10.1038/ S41534-019-0184-5, describes an ion trap having a microwave conductor.

Document I. Pogorelov et al., "A compact ion-trap quantum computing demonstrator", arxiv.org, Cornell University Library, 201 Olin Library Cornell University Ithaca, NY 14853, 7 June 2021, describes a quantum computer.

The use of hyperfine levels of atomic ions as quantum bits (qubits) for building a quantum computer is being investigated in a number of research groups and companies worldwide. The energy separation between the hyperfine levels often corresponds to the microwave (MW) range, i.e. the wavelength of the electromagnetic radiation is in the order of millimeters or centimeters and the corresponding transition frequency is in the order of several to several hundred GHz. In order to drive the transitions between the hyperfine levels, one can use a magnetic field oscillating at the transition frequency.

One object to be achieved is to provide an improved quantum computing device, for example a quantum computing device which enables the amplitude of an oscillating magnetic field to be maximized at the position of the ion in order to speed up the single-qubit gate operations. Further objects to be achieved are to provide a quantum computing arrangement with such a quantum computing device and a quantum computer with such a quantum computing device. Yet a further object to be achieved is to provide a method for operating such a quantum computing device.

The invention is set out in the appended set of claims. First, the quantum computing device is specified.

The quantum computing device comprises a substrate. The substrate may be an electrically isolating substrate. The substrate may comprise or consist of one or more of: glass, sapphire, diamond, ceramic, e.g. AlN.

The quantum computing device comprises a resonator electrode fixed to the substrate. The resonator electrode may be arranged on an outer surface of the substrate or may be integrated into the substrate. The resonator electrode is, in particular, a conductor track.

The quantum computing device is configured to realize a planar Paul trap for trapping at least one ion. In other words, during operation, the quantum computing device, i.e. at least a portion thereof, constitutes a planar Paul trap. A Paul trap is also known as a quadrupole ion trap or a radio frequency (RF) trap. It is a type of ion trap that uses dynamic electric fields to trap charged particles.

The planar Paul trap is configured to trap at least one ion, i.e. one or more ions. For example, the planar Paul trap is configured to trap at least one ion crystal with two or more, e.g. at least eight or at least 20 or at least 100 and/or at most 1000 ions. The ions of the ion crystal may be lined up along a predefined line, e.g. along a predefined straight line.

Components of the quantum computing arrangement which constitute electrodes of the planar Paul trap for producing an electrical trapping potential, in the following simply referred to as trap electrodes, are arranged on a top side of the substrate. For example, all trap electrodes of the planar Paul trap with which the electrical trapping potential is produced are arranged on the top side of the substrate. The top side of the substrate is, for example, a planar outer surface of the substrate. The substrate may mechanically stabilize the trap electrodes. For example, the planar Paul trap comprises at least two RF-electrodes and at least two DC-electrodes.

During operation, the trap electrodes of the planar Paul trap create an oscillating electrical potential configured to trap at least one ion or at least one ion crystal with several ions lined up in a direction parallel to the predefined line and in directions perpendicular to the predefined line, herein also referred to as radial directions. Effectively, at least one electrical potential well is created in which the ion(s) is(are) trapped in all spatial directions and which is, for example, formed such that the ions arrange along the predefined line one behind the other, e.g. in a linear arrangement. A plurality of ions trapped in the same electrical potential well is herein referred to as an ion crystal. The predefined line of the ion crystal may be parallel to the top side of the substrate.

In a planar Paul trap, the trapped ion or ions float above the top side of the substrate and, for example, at a height (measured with respect to the top side) exceeding the height of each of the trap electrodes. Thus, the trapped ion(s) may float above all trap electrodes.

The trap electrodes of the planar Paul trap may each be different from the resonator electrode. Alternatively, the resonator electrode may constitute a trap electrode of the planar Paul trap so that the resonator electrode is part of the planar Paul trap. Here and in the following, when describing features of an electrode without specifying whether the electrode is a trap electrode or the resonator electrode, the features are particularly disclosed for the resonator electrode and/or the trap electrodes.

The electrodes may be applied to the substrate with the help of a deposition method, like sputtering or evaporation. The electrodes may be formed with the help of lithography. The thickness of the trap electrodes may be increased by using a galvanic process. Between the electrodes and the substrate there may be an adhesion layer for improving the adhesion of the electrodes to the substrate. The electrodes may each be formed as a plate or sheet or a film. Main extension planes of the electrodes run parallel to the top side, for example. The electrodes may each be formed of metal. For example, they are formed of Au or of another material, like Cu. In this case, the electrodes may be coated with Au. The electrodes are, in particular, each a contiguous metal element without interruptions. For example, the extensions of electrodes along their respective main extension plane are at most 10 mm or at most 5 mm or at most 1 mm. The thicknesses of the electrodes measured perpendicularly to the top side of the substrate are, for example, at most 100 µm or at most 50 µm. The top side of the substrate may have an area of at most 300 mm² at most 100 mm² or at most 50 mm².

Due to the small size of the quantum computing device and the methods used for producing the quantum computing device, the quantum computing device may also be called "quantum computing chip".

The resonator electrode has a plurality of windings. In particular, the resonator electrode is a conductor track winding into itself. For example, each winding may surround a geometrical center of the resonator electrode. The windings of the resonator electrode may each be rectangular-shaped or elliptical-shaped or circular-shaped or hexagonal-shaped. The different windings of the resonator electrode are electrically connected to each other, e.g. are formed in one piece. For example, the resonator electrode is spiral-shaped. The resonator electrode has at least two windings or at least three windings or at least four windings or at least five windings. Additionally or alternatively, the resonator electrode may have at most 20 windings or at most 15 windings or at most ten windings or at most eight windings or at most seven windings.

For example, the width of the resonator electrode in the section of the windings is constant within the limits of manufacturing tolerance. The width is, for example, at least 5 µm and at most 50 µm, e.g. between 10 µm inclusive and 13 µm inclusive. The gap between each two neighboring windings may be at least 1 µm and at most 10 µm, e.g. between 4 µm inclusive and 6 µm inclusive.

The resonator electrode is configured as a resonator for an electromagnetic wave having a resonance frequency. That is, the resonator electrode is configured such that an electromagnetic wave / alternating electrical signal having the resonance frequency fed into the reflector electrode is reflected back and forth in the resonator electrode by internal reflection and the resulting waves/signals traveling in the resonator electrode add up to a standing wave. Thus, for a particular frequency, namely the resonance frequency, electromagnetic waves / signals reflected back and forth in the resonator electrode match in phase, which amplifies the corresponding electrical current in the resonator electrode and making it a resonator.

The quantum computing device is configured such that, when the resonator electrode is supplied with an alternating electrical signal having the resonance frequency, the resonator electrode generates an oscillating magnetic field at the position of the at least one trapped ion. This oscillating magnetic field is, in particular, intended to induce a transition, like a hyperfine transition, in the ion. For example, the quantum computing device is configured such that the position of the at least one trapped ion is in the near-field of the resonator electrode when supplied with an alternating electrical signal of the resonance frequency. By way of example, the quantum computing device is configured such that a distance of the at least one trapped ion to the resonator electrode is at most 300 µm or at most 200 µm and/or at least 10 µm. The resonance frequency may correspond to the microwave range. For example, the resonance frequency is at least 300 MHz or at least 1 GHz or at least 10 GHz and/or at most 300 GHz or at most 100 GHz or at most 50 GHz.

The quantum computing device comprises a substrate and a resonator electrode fixed to the substrate. The quantum computing device is configured to realize a planar Paul trap for trapping at least one ion. Components of the quantum computing device, which constitute electrodes of the planar Paul trap for producing an electrical trapping potential, are arranged on a top side of the substrate. The resonator electrode has a plurality of windings and is configured as a resonator for an electromagnetic wave having a resonance frequency. When supplied with an alternating electrical signal having the resonance frequency, the resonator electrode generates an oscillating magnetic field at the position of the at least one trapped ion in order to induce a transition in the trapped ion.

The present invention is, inter alia, based on the recognition that it is beneficial to maximize the amplitude of the oscillating magnetic field at a given applied electrical power, as this maximizes the single-qubit gate speed. Moreover, the electrical power that can be applied to the quantum computing device may be limited, in particular in cryogenic setups, so that a maximum of this limited power should be used.

The inventors had the idea to combine a wound resonator electrode with a planar Paul trap. Due to the resonant character of the resonator electrode, the amplitude of the generated oscillating magnetic field is maximized. Moreover, due to the design of the resonator electrode having a plurality of windings, the generated oscillating magnetic field, particular the maximum amplitude thereof, is spatially focused and, thus, can be precisely applied to the position where the at least one ion is to be trapped.

It turned out that combining such a resonator electrode with a planar Paul trap is particularly advantageous since, in a planar Paul trap, the ions can be trapped very close to the substrate, e.g. only tens or hundreds of micrometers above the top side thereof. This allows to locate that resonator electrode very close to the trapped ion so that the trapped ion feels the near-field of the resonator electrode. The amplitude of the generated oscillating magnetic field felt by the trapped ions is then particularly high. Planar Paul traps can be produced with microfabrication technologies, such as lithography, and, therefore, the accuracy is high and complex 2D-shapes of the trap electrodes are possible. Furthermore, planar Paul traps are easy to scale to multiple quantum processor zones.

The design of the resonator electrode presented herein has a further advantage, namely that the created oscillating magnetic field has a large gradient in the magnetic field amplitude. For example, the resonator electrode is arranged such that the gradient of the magnetic field amplitude is along the predefined line along which the ions are lined up. Thus, two neighbouring ions feel different amplitudes of the oscillating magnetic field. This is necessary for a particular multi-qubit coupling mechanism and an individual ion addressing mechanism.

According to at least one embodiment, the resonator electrode is arranged on the top side of the substrate, i.e. on the same side as the trap electrodes of the planar Paul trap. In this way, the at least one trapped ion can be particularly close to the resonator electrode.

The resonator electrode has an open end, and each winding runs around the open end. The open end of the resonator electrode is, in particular, a longitudinal end of the resonator electrode. The open end is an end of the resonator electrode where an electromagnetic wave or an electric signal, respectively, is reflected. That is, an electrical signal transported along the resonator electrode towards the open end cannot travel beyond that open end.

Each winding of the resonator electrode may completely run around the open end. For example, in top view onto the top side of the substrate, each winding completely surrounds the open end. For example, the open end coincides with the geometrical center of the windings.

According to at least one embodiment, the resonator electrode has an innermost winding. The innermost winding ends in the open end. In other words, the innermost winding comprises the open end. The innermost winding is the winding of the resonator electrode with the smallest average distance to the open end.

According to at least one embodiment, the distance to the open end increases monotonously when moving along the resonator electrode from the innermost winding to an outermost winding of the resonator electrode. The outermost winding runs around the innermost winding or around every other winding of the resonator electrode. The outermost winding is that winding of the resonator electrode that has the largest average distance to the open end.

According to at least one embodiment, the windings of the resonator electrode form a rectangular spiral. For example, each winding comprises four sections, each of which follows a straight line within the limits of manufacturing tolerance. Each two straight sections of a winding have different distances to the open end.

The resonator electrode has a transition from a section of the resonator electrode to a feedline with a characteristic impedance mismatch (i.e. a mismatch between the characteristic impedances) between the feedline and said section at the transition so that an electromagnetic wave having the resonance frequency is reflected back and forth between the open end and the transition. Said section is the outermost winding of the resonator electrode and the transition may be at an end of the outermost winding, e.g. at an end of the spiral opposite to the open end.

The feedline may be part of the resonator electrode. The feedline is used for supplying an electrical signal to the windings of the resonator electrode. The characteristic impedance mismatch depends, in particular, on the geometry, e.g. thickness and width, of the feedline and the resonator electrode.

For example, the resonator electrode is configured such that the Q-factor of the resonator is at least 5 or at least 10 or at least 20 or at least 30.

The feedline is, for example, straight. The width of resonator electrode in said section may be smaller, e.g. at most 75 %, than the width of the feedline.

According to at least one embodiment, the quantum computing device is configured such that at least one ion is trapped above the open end of the resonator electrode. "Above" herein means with respect to the top side. For example, in top view onto the top side, the at least one trapped ion lies within a circle around the open end having a radius which is at most the average distance of the innermost winding to the open end. The radius is, for example, at most 50 µm or at most 30 µm or at most 10 µm. In other words, in lateral directions, parallel to the top side, the at least one ion is aligned with the open end or overlaps with the open end, respectively. For example, the vertical distance, measured in the direction perpendicular to the top side, of the position of the trapped ion to the open end is at least 50 µm and at most 90 µm.

According to at least one embodiment, the planar Paul trap is configured to trap an ion with an internal transition having a transition energy corresponding to a transition frequency f_t. For example, the transition frequency f_t corresponds to the microwave range. For example, the transition frequency f is at least 1 GHz and at most 100 GHz.

According to at least one embodiment, the resonance frequency of the resonator is f_t ± 10% or f_t ± 1%. That is, the resonance frequency of the resonator is matched to the transition frequency f_t of the internal transition of the ion.

By way of example, the trapped ion is a ¹⁷¹Yb⁺ ion with a hyperfine transition having the transition frequency f_t = 12.64 GHz. This corresponds to 24 mm wavelength in vacuum. The resonance frequency of the resonator is then, for example, between 11 GHz inclusive and 14 GHz inclusive.

According to at least one embodiment, the length of the resonator electrode between the open end and the transition is n*c/(4*f_res) ± 10% or n*c/(4*f_res) ± 1%, wherein n is an integer ≥ 1, c is the speed of light in the resonator electrode and f_res is the resonance frequency. For example, n is equal to 1.

According to at least one embodiment, the windings of the resonator electrode are all arranged in a first plane. This means that the first plane intersects with each of the windings. The first plane may be a virtual plane. For example, the first plane is parallel to a main extension plane of each winding. The first plane may be parallel to the top side of the substrate but offset of the top side.

According to at least one embodiment, at least some of the electrodes of the planar Paul trap are arranged in a second plane. For example, electrodes of the same type, e.g. RF electrodes or DC electrodes, are arranged in the second plane. Also here, a trap electrode lying in the second plane means that the second plane intersects with the trap electrode. The second plane may be a virtual plane. For example, the second plane is parallel to the main extension planes of the electrodes with which it intersects. The second plane may be parallel to the top side of the substrate but offset of the top side.

According to at least one embodiment, the second plane and first plane lie at different heights above the top side. Particularly, the windings of the resonator electrode do not intersect with the second plane and the electrodes of the planar Paul trap arranged in the second plane do not intersect with the first plane. Particularly, the first plane and the second plane may be parallel to each other but may be spaced from each other, e.g. by at least 5 µm and/or at most 50 µm.

By way of example, in a vertical direction perpendicular to the top side, the windings of the resonator electrode do not overlap with the trap electrodes arranged in the second plane.

According to at least one embodiment, the first plane is arranged between the top side of the substrate and the second plane.

According to at least one embodiment, RF electrodes of the planar Paul trap to be supplied with an alternating voltage are arranged in the second plane. During operation, the RF electrodes are, for example, supplied with an alternating voltage in the frequency range between 1 MHz and 50 MHz. With the help of the RF electrodes, an oscillating electrical potential is created for confining the ion(s) in radial direction. The placement of the windings in a different plane than the RF electrodes enables to optimize the geometries of the RF electrodes and of the resonator electrode independently of each other so that the ions can be trapped at a low height in the region of a high magnetic field and a high magnetic field gradient.

According to at least one embodiment, DC electrodes of the planar Paul trap, e.g. all DC electrodes of the planar Paul trap, are arranged in the first plane. DC electrodes are supplied with a constant voltage during operation, for example. The DC electrodes are, in particular, used to confine the at least one ion in longitudinal direction, e.g. parallel to the predefined line.

According to at least one embodiment, the open end is arranged between two RF electrodes of the planar Paul trap in a first lateral direction. The first lateral direction is, for example, a direction parallel to the top side of the substrate. The two RF electrodes may be adjacent RF electrodes in the first lateral direction.

For instance, at least one winding or at least two windings of the resonator electrode are arranged between the two RF electrodes in the first lateral direction. At least one winding or at least two windings of the resonator electrode may be aligned with the two RF electrodes in the first lateral direction. For example, in top view onto the top side, at least one or at least two windings of the resonator electrode are partially covered by the two RF electrodes.

According to at least one embodiment, the open end is arranged between two DC electrodes of the planar Paul trap in a second lateral direction. The second lateral direction is perpendicular to the first lateral direction. Particularly, the second lateral direction is a direction parallel to the top side of the substrate. The two DC electrodes may be adjacent DC electrodes in the second lateral direction.

For instance, at least one winding or at least two windings, for example all windings of the resonator electrode, may be arranged between the two DC electrodes in the second lateral direction.

The above-defined predefined line, along which the plurality of ions may be lined up, may be parallel to the second lateral direction. Each of the RF-electrodes is, for example, an elongated electrode with a main extension direction parallel to the second lateral direction. Each two adjacent RF-electrodes may be spaced from each other in the first lateral direction.

By way of example, in top view onto the top side, the open end of the resonator electrode and, optionally, at least one or at least two windings of the resonator electrode, may be exposed so that they are neither covered by an RC electrode nor a DC electrode of the planar Paul trap. In this way, the oscillating magnetic field generated by the resonator electrode can reach the trapped ion(s) particularly efficiently.

According to at least one embodiment, the quantum computing device is free of any electrically conductive material in the space between the open end and the position where the at least one ion is to be trapped. Thus, the oscillating magnetic field can reach the trapped ion without being shielded. For example, the space between the open end of the resonator electrode and the position where the ion is to be trapped, is free of any solid material.

Next, the quantum computer arrangement is specified. The quantum computer arrangement comprises, in particular, a quantum computing device as specified herein. Furthermore, the quantum computing arrangement comprises a signal generator configured to supply the resonator electrode with an alternating electrical signal. That is, the signal generator is configured to supply the resonator electrode with alternating electric current or to induce an alternating electrical current in the resonator electrode. The signal generator may be electrically connected to the resonator electrode.

According to at least one embodiment, the signal generator is configured to supply the resonator electrode with an alternating electrical signal having the resonance frequency or at least approximately the resonance frequency, e.g. with a maximum deviation from the resonance frequency of 10% or 1%.

According to at least one embodiment, the quantum computing arrangement comprises a vacuum chamber. During operation, the ions are trapped in the vacuum chamber. The planar Paul trap may be arranged in the vacuum chamber. The vacuum chamber may be an ultra-high vacuum chamber, an extreme-high vacuum chamber and/or a cryostat.

Next, the quantum computer is specified. The quantum computer comprises a quantum computing device or the quantum computing arrangement as specified herein. The quantum computer is configured to perform quantum computations.

The trapped ion(s) of the quantum computing device can be controlled and manipulated particularly well with the help of the resonator electrode described herein in order to perform predetermined quantum calculations.

According to at least one embodiment, the quantum computer further comprises a cooling and/or read-out system. The cooling and/or the read-out system is, for example, laser-based. The cooling system is configured for cooling the at least one ion in order to prepare it in low motional state and trap it in its respective ground state. The read-out system is configured for determining the state of each ion. For example, the ions are cooled and/or read-out by impinging a laser beam on them or by scattering photons of the laser beam, respectively.

Next, the method for operating a quantum computing device is specified. The method is configured to operate the quantum computing device according to any of the embodiments described herein. Therefore, all features disclosed in connection with the quantum computing device are also disclosed for the method and vice versa.

According to at least one embodiment, the method comprises the step of supplying the resonator electrode with an alternating electrical signal having the resonance frequency or at least approximately the resonance frequency, e.g. with a maximum deviation from the resonance frequency of 10% or 1%.

Hereinafter, the quantum computer device, the quantum computer arrangement and the quantum computer will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows a first exemplary embodiment of the quantum computing device in top view,
Figure 2 shows a section of the first exemplary embodiment of the quantum computing device in a perspective view,
Figure 3 shows the first exemplary embodiment of the quantum computing device in a cross-sectional view,
Figure 4 shows the first exemplary embodiment of the quantum computing device in top view with some elements omitted,
Figure 5 shows a photograph of a second exemplary embodiment of the quantum computing device in top view,
Figure 6 shows an exemplary embodiment of the quantum computer and the quantum computing arrangement.

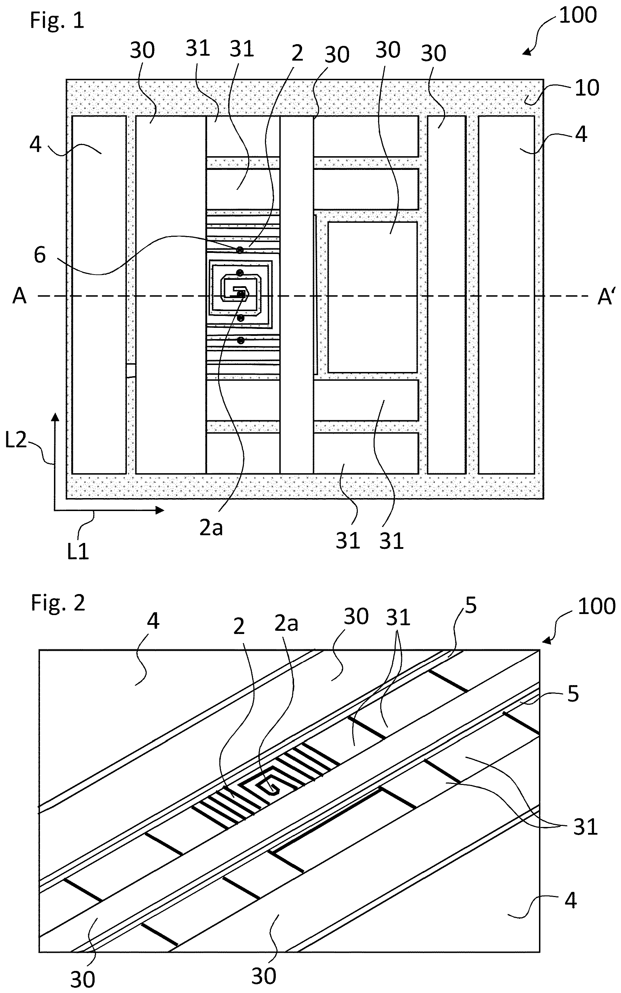

In figure 1, a first exemplary embodiment of the quantum computing device 100 is shown in top view onto the top side 10 of a substrate 1 of the quantum computing device 100. The substrate 1 is, for example, of glass or sapphire or diamond or AlN.

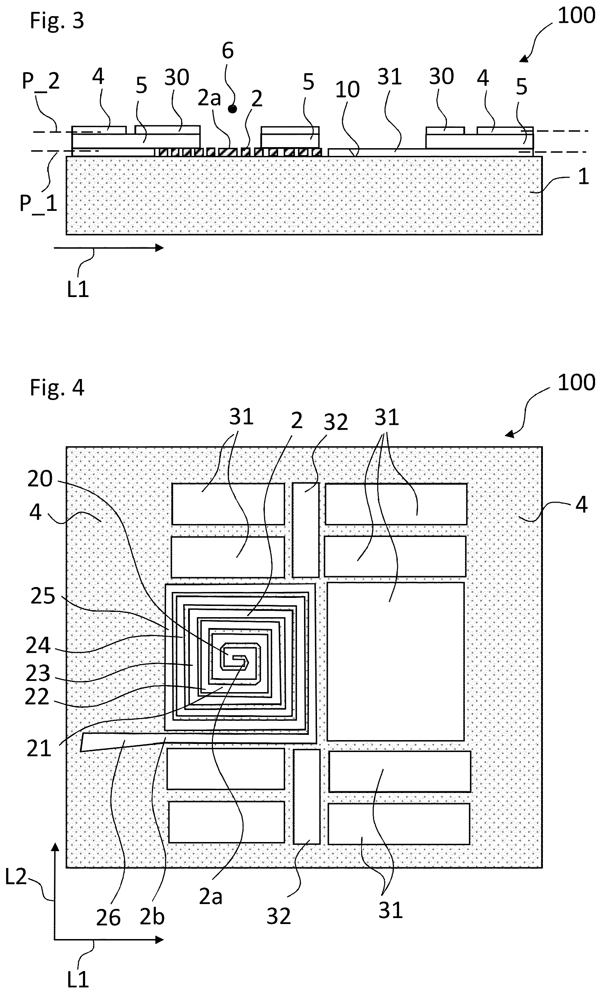

On the top side 10 of the substrate 1, a resonator electrode 2 is arranged. The resonator electrode 2 is partially covered by some electrodes 4, 30. In order to better see the details of the resonator electrode 2, figure 4 shows the same view as figure 1 but with the electrodes 4, 30 omitted.

The resonator electrode 2 is a conductor track, e.g. of Au, on the top side 10. A section of the resonator electrode 2 has the geometrical shape of a rectangular spiral with a plurality of windings 20 to 25. In the present case, the resonator electrode 2 comprises six windings 20 to 25, which all surround an open end 2a of the resonator electrode 2. The open end 2a is assigned to the innermost winding 20 of the resonator electrode 2. The outermost winding 25 of the resonator electrode 2 is electrically connected to a feedline 26 of the resonator electrode 2. A characteristic impedance mismatch appears at the transition 2b between the feedline 26 and the outermost winding 25.

During operation, an alternating electric signal is supplied to the windings 20 to 25 of the resonator electrode 2 via the feedline 26. This signal is then reflected back and forth between the open end 2a and the transition 2b (due to the characteristic impedance mismatch). If the frequency of the signal has a certain frequency, called resonance frequency, the back and forth signals overlay constructively which results in a standing electromagnetic wave between the open end 2a and the transition 2b. Thus, the resonator electrode 2 is a resonator for an electromagnetic wave/signal having the resonance frequency.

In the present case, the length of the resonator electrode 2 measured between the open end 2a and the transition 2b is, for example, c/(4*f_res) ± 10 %, wherein c is the speed of light in the resonator electrode 2 and f_res is the resonance frequency. The width of the windings 20 to 25 is, for example, 11.8 µm, and the gap between each two adjacent windings is 5 µm, for example.

When the resonator electrode 2 is supplied with an alternating electric signal having the resonance frequency, a comparably strong oscillating magnetic field is generated at least in the near-field region above the open end 2a. Due to the spiral-like shape of the resonator electrode 2, the amplitude of the oscillating magnetic field is spatially focused and is particularly high in the region directly above the open end 2a. The amplitude also has a gradient in directions parallel to the top side 10 of the substrate 1. The maximum gradient may be laterally, i.e. in directions parallel to the top side, offset to the open end 2a, e.g. by about 100 µm.

In order to use this oscillating magnetic field for quantum computations, the quantum computing device 100 of figure 1 constitutes a planar Paul trap. This planar Paul trap comprises RF electrodes 30 and DC electrodes 31. The RF electrodes 30 are supplied with an alternating voltage during operation and the DC electrodes 31 are supplied with a constant voltage, for example. Furthermore, there are ground electrodes 4 on the top side 10 of the substrate 1. Further electrodes 32 are located below the RF electrodes an are electrically connected to the RF electrodes by vias. The electrodes 4, 30, 31, 32 may be made of Au. The electric fields generated with the electrode 30, 31 are used to trap ions 6, which are also indicated in figure 1. Here, several ions 6 are trapped and lined up along a predefined straight line. The trapped ions 6 are above the top side 10 in the near-field of the resonator electrode 2.

As can be seen in figure 1, the open end 2a of the resonator electrode 2 is located, in a first lateral direction L1, between two RF electrodes 30 and, in a second lateral direction L2, between two DC electrodes 31. The lateral directions L1, L2 are directions parallel to the top side 10 of the substrate 1. The predefined line along which the ions 6 are lined up is parallel to the second lateral direction L2.

Differently to what is shown in the figures, the ions 6 may be trapped in the region of the maximum gradient of the magnetic field and not directly above the open end 2a. That is, the line, along which the ions 6 are lined up, may be offset in the first lateral direction L1 with respect to the open end 2a.

In figures 2 and 3 it can be seen that the RF electrodes 30 are actually arranged in a different plane with respect to the top side 10 of the substrate 1 than the DC electrodes 31 and the resonator electrode 2. In particular, all windings 20 to 25 of the resonator electrode 2, as well as the DC electrodes 31, intersect with a first plane P_1. The RF electrodes 31 intersect with a second plane P_2 which lies above the first plane P_1 with respect to the top side 10. The RF electrodes 31 do not intersect with the first plane P_1 and the resonator electrode 2 as well as the DC electrodes 31 do not intersect with the second plane P_2.

Figures 2 and 3 also indicate that, in order to have the ground electrodes 4 and the RF electrodes 30 on a higher level than the DC electrodes 31 and the resonator electrode 2, they are arranged on a dialectic layer 5 which is, for example, made of polyimide. The dielectric layer 5 also electrically isolates the RF electrodes 30 from the resonator electrode 2.

By way of example, the thicknesses of the electrodes 2, 4, 30, 31, 32 are, in each case, 10 µm. The thickness of the dielectric layer 5 may be 10 µm as well.

In the cross-sectional view of figure 3, the position of a trapped ions 6 is again indicated. As can be seen, the trapped ions 6 float above the open end 2a of the resonator electrode 2 and are positioned at a height exceeding the RF electrodes 30 and the ground electrodes 4. By way of example, the ions 6 float 72 µm above the open end 2a of the resonator electrode 2.

The ions 6 may be a ¹⁷¹Yb⁺ ions having a hyperfine transition corresponding to the transition frequency of 12.64 GHz. The resonance frequency of the resonator electrode 2 may be chosen to be approximately 12.64 GHz. It has been experimentally measured that, when supplying an electrical signal to the resonator electrode 2 having such a frequency and having an estimated power of 8.4 mW, the magnetic field amplitude of the oscillating magnetic field generated at the position of the ions 6 directly above the open end 2a (at a height of 72 µm) is about 176 µT. The maximum magnetic field amplitude gradient is expected to be 13 T/m from 1 W applied to the resonator electrode 2.

It should be noted that, in the first exemplary embodiment of figures 1 to 3, there are actually three RF electrodes 30 arranged parallel to each other. The open end 2a of the resonator electrode 2 is arranged between a first and a second RF electrode 30 in the first lateral direction L1. The third RF electrode, arranged at the right hand side of figure 1, could be omitted, for example. However, this third RF electrode 30 can be used for trapping ions at a different height than when using only first and the second RF electrodes. In this way, two ions or two ion crystals could be trapped at different heights with respect to the top side 10 when using three RF electrodes, for example.

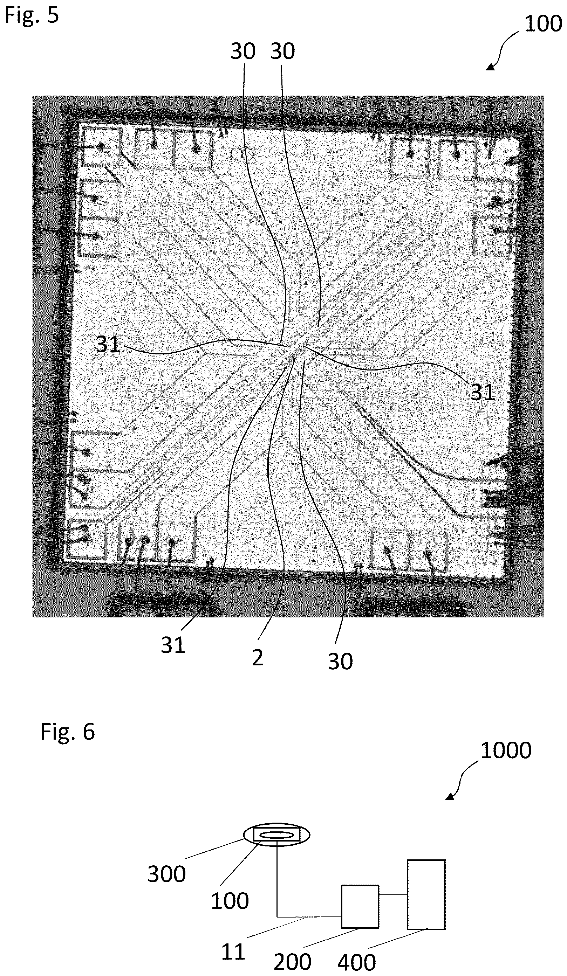

Figure 5 shows a photograph of a second exemplary embodiment of the quantum computing device 100. This photograph shows an actually realized quantum computing device 100. The quantum computing device 100 is a chip of 5×5 mm².

Figure 6 shows an exemplary embodiment of a quantum computer 1000. The quantum computer 1000 comprises a quantum computing arrangement having a quantum computing device 100 according to one of the exemplary embodiments described herein and external control electronics 200 comprising a signal generator for supplying the resonator electrode 2 with an alternating electrical signal having the resonance frequency. The quantum computing arrangement further comprises a chamber 300, in which the quantum computing device 100 is located. The chamber 300 may be an ultra-high vacuum chamber, an extreme-high vacuum chamber and/or a cryostat.

The quantum computing device 100 is connected to the external control electronics 200 through the chamber 300 by a plurality of connections 11. The connections 11 further connect the quantum computing device 100 with a classical computer 400.

The quantum computing arrangement is configured to trap, manipulate and measure trapped ions. For this, the quantum computing arrangement may comprise, besides the quantum computing device 100, light guides and/or internal electronics comprising electronic devices. The electronic devices can comprise circuitry, integrated electronics, power supply and/or detectors, such as photon detectors and/or charge detectors, controllers etc. Exemplarily, the internal electronics are provided for pre-processing. For example, these components allow a measurement of a respective state of the ion and allow gate operations on the ion. Thus, the quantum computing arrangement is configured to trap the ions as well as to carry out operations and measurements on the trapped ions.

The quantum computing arrangement, particularly the quantum computing device 100, is connected to the external electronics 200 via the connections 11. The external electronics 200 can be located at least partially inside and partially outside the chamber 300. Further, the external electronics 200 is connected to the classical computer 400.

The external electronics 200 may comprise, besides the signal generator for supplying the resonator electrode, analog to digital converters, low-frequency signal generators and/or direct current signal generators. Furthermore, the external electronics 200 can comprise a transistor-transistor logic, TTL.

Additionally, the external electronics 200 can further comprise at least one laser-based system configured to cool the trapped ions. Further, the laser-based system can be configured to excite a particular state of the trapped ions and/or to read-out a particular state of the ions.

The classical computer 400 is configured, for example, to provide and receive digital signals. The digital signals correspond to control signals used for operations on the qubits/ions as well as to measure signals corresponding to a state of the qubits.

The external electronics 200 is, inter alia, configured to convert the digital signals to analog signals and vice versa. Therefore, the external electronics 200 is configured to provide the converted analog signals for manipulating the ions (qubits) to the quantum computing arrangement. Further, the external electronics 412 is configured to provide measured analog signals from the quantum computing arrangement to the classical computer 400.

The classical computer 400 is exemplarily configured to be provided with a specific algorithm, i.e. a predetermined quantum calculation solving a specific problem. The classical computer 400 is then configured to convert a compiled code corresponding to the algorithm to commands for the quantum computing arrangement. The commands are subsequently forwarded via the external control electronics 200 to the quantum computing arrangement. Furthermore, the classical computer 400 is configured to receive a measured outcome of the specific algorithm.

For example, all elements of the quantum computer 1000, in particular all electronic elements of the quantum computer 1000, are synchronized by an atomic clock reference, for example.

### Reference signs

- 1: substrate
- 2: resonator electrode
- 2a: open end
- 2b: transition
- 4: ground electrode
- 5: dielectric layer
- 6: ion
- 10: top side
- 11: connections
- 20: innermost winding
- 21 to 24: windings
- 25: outermost winding
- 26: feedline
- 30: RF electrode
- 31: DC electrode
- 32: further electrode
- 100: quantum computing device
- 200: external control electronics / signal generator
- 300: chamber
- 400: classical computer
- 1000: quantum computer
- L1: first lateral direction
- L2: second lateral direction
- P_1: first plane
- P_2: second plane

## Claims

1. Quantum computing device (100), comprising
- a substrate (1),
- a resonator electrode (2) fixed to the substrate (1), wherein
- the quantum computing device (100) is configured to realize a planar Paul trap for trapping at least one ion (6),
- components (30, 31) of the quantum computing device (100) which constitute electrodes (30, 31) of the planar Paul trap for producing an electrical trapping potential are arranged on a top side (10) of the substrate (1),
- the resonator electrode (2)
- has a plurality of windings (20 to 25),
- has an open end (2a), wherein each winding of the plurality of windings (20 to 25) runs around the open end (2a),
- is configured as a resonator for an electromagnetic wave having a resonance frequency,
- has a transition (2b) from the outermost winding (25) of the plurality of windings(20 to 25) of the resonator electrode (2) to a feedline (26) with a characteristic impedance mismatch between the feedline (26) and said outermost winding (25) at the transition (2b) so that an electromagnetic wave having the resonance frequency is reflected back and forth between the open end (2a) and the transition (2b),
- when supplied with an alternating electrical signal having the resonance frequency, generates an oscillating magnetic field at the position of the at least one trapped ion (6) in order to induce a transition in the ion (6).

2. Quantum computing device (100) according to claim 1, wherein
- the resonator electrode (2) is arranged on the top side (10) of the substrate (1).

3. Quantum computing device according to claim 1 or 2, wherein
- each winding (20 to 25) runs around the open end (2a).

4. Quantum computing device (100) according to claim 3, wherein
- the resonator electrode (2) has an innermost winding (20), of the plurality of windings (20 to 25), ending in the open end (2a),
- the distance to the open end (2a) increases monotonously when moving along the resonator electrode (2) from the innermost winding (20) to the outermost winding (25) of the plurality of windings (20 to 25) of the resonator electrode (2).

5. Quantum computing device (100) according to claim 4, wherein
- the plurality of windings (20 to 25) of the resonator electrode (2) form a rectangular spiral.

6. Quantum computing device (100) according to any one of claims 1 to 5, wherein
- the quantum computing device (100) is configured such that the at least one ion (6) is trapped above the open end (2a) of the resonator electrode (2).

7. Quantum computing device (100) according to any one of the preceding claims, wherein
- the planar Paul trap is configured to trap an ion (6) with an internal transition having a transition energy corresponding to a transition frequency f_t,
- the resonance frequency is f_t ± 10 %.

8. Quantum computing device (100) according to any one of the preceding claims, wherein
- the length of the resonator electrode (2) between the open end (2a) and the transition (2b) is n*c/(4*f_res) ± 10 %, wherein n is an integer ≥ 1, c is the speed of light in the resonator electrode and f_res is the resonance frequency.

9. Quantum computing device (100) according to any one of the preceding claims, wherein
- the plurality of windings (20 to 25) of the resonator electrode (2) are all arranged in a first plane (P_1),
- at least some of the electrodes (30) of the planar Paul trap are arranged in a second plane (P_2),
- the second plane (P_2) and the first plane (P_1) lie at different heights above the top side (10) so that the plurality of windings (20 to 25) of the resonator electrode (2) do not intersect with the second plane (P_2) and so that the electrodes (30) of the planar Paul trap arranged in the second plane (P_2) do not intersect with the first plane (P_1),
- the first plane (P_1) is arranged between the top side (10) of the substrate (1) and the second plane (P_2).

10. Quantum computing device (100) according to claim 9, wherein
- RF electrodes (30) of the planar Paul trap to be supplied with an alternating voltage are arranged in the second plane (P_2).

11. Quantum computing device (100) according to any one of the preceding claims, wherein
- the open end (2a) is arranged between two RF electrodes (30) of the planar Paul trap (3) in a first lateral direction (L1),
- the open end (2a) is arranged between two DC electrodes (31) of the planar Paul trap (3) in a second lateral direction (L2) being perpendicular to the first lateral direction.

12. Quantum computing device (100) according to any one of the preceding claims, wherein
- the quantum computing device (100) is free of any electrically conductive material in the space between the open end (2a) and the position where the at least one ion (6) is to be trapped so that the oscillating magnetic field can reach the trapped ion (6) without being shielded.

13. Quantum computer arrangement comprising
- the quantum computing device (100) according to any one of the preceding claims,
- a signal generator (200) configured to supply the resonator electrode (2) with an alternating electrical signal having the resonance frequency.

14. Quantum computer (1000) comprising the quantum computing device (100) according to any one of claims 1 to 12 or the quantum computing arrangement according to claim 13 and being configured to perform quantum computations, wherein the quantum computer (1000) particularly further comprises a laser-based cooling and/or read-out system.

15. Method for operating the quantum computing device (100) according to any one of claims 1 to 12, comprising
- supplying the resonator electrode (2) with an alternating signal having a frequency which differs at most 10% from the resonance frequency.

## Patentansprüche

1. Quantencomputervorrichtung (100), umfassend
- ein Substrat (1),
- eine Resonatorelektrode (2), die an dem Substrat (1) befestigt ist, wobei
- die Quantencomputervorrichtung (100) so eingerichtet ist, dass sie eine planare Paul-Falle zum Einfangen mindestens eines Ions (6) realisiert,
- Komponenten (30, 31) der Quantencomputervorrichtung (100), die Elektroden (30, 31) der planaren Paul-Falle zur Erzeugung eines elektrischen Einfangpotentials bilden, auf einer Oberseite (10) des Substrats (1) angeordnet sind,
- die Resonatorelektrode (2)
- eine Vielzahl von Windungen (20 bis 25) hat,
- ein offenes Ende (2a) hat, wobei jede Windung der Vielzahl von Windungen (20 bis 25) um das offene Ende (2a) verläuft,
- als Resonator für eine elektromagnetische Welle mit einer Resonanzfrequenz ausgebildet ist,
- einen Übergang (2b) von der äußersten Windung (25) der Vielzahl von Windungen (20 bis 25) der Resonatorelektrode (2) zu einer Zuleitung (26) mit einer charakteristischen Impedanzfehlanpassung zwischen der Zuleitung (26) und der genannten äußersten Windung (25) an dem Übergang (2b) aufweist, so dass eine elektromagnetische Welle mit der Resonanzfrequenz zwischen dem offenen Ende (2a) und dem Übergang (2b) hin und her reflektiert wird,
- wenn sie mit einem elektrischen Wechselsignal mit der Resonanzfrequenz versorgt wird, ein oszillierendes Magnetfeld an der Position des mindestens einen eingefangenen Ions (6) erzeugt, um einen Übergang in dem Ion (6) zu induzieren.

2. Quantencomputervorrichtung (100) nach Anspruch 1, wobei
- die Resonatorelektrode (2) auf der Oberseite (10) des Substrats (1) angeordnet ist.

3. Quantencomputervorrichtung nach Anspruch 1 oder 2, wobei
- jede Windung (20 bis 25) um das offene Ende (2a) verläuft.

4. Quantencomputervorrichtung (100) nach Anspruch 3, wobei
- die Resonatorelektrode (2) eine innerste Windung (20) der Vielzahl von Windungen (20 bis 25) hat, die in das offene Ende (2a) mündet,
- der Abstand zu dem offenen Ende (2a) monoton zunimmt, wenn man sich entlang der Resonatorelektrode (2) von der innersten Windung (20) zu der äußersten Windung (25) der Vielzahl von Windungen (20 bis 25) der Resonatorelektrode (2) bewegt.

5. Quantencomputervorrichtung (100) nach Anspruch 4, wobei
- die Vielzahl von Windungen (20 bis 25) der Resonatorelektrode (2) eine rechteckige Spirale bildet.

6. Quantencomputervorrichtung (100) nach einem der Ansprüche 1 bis 5, wobei
- die Quantencomputervorrichtung (100) so konfiguriert ist, dass das mindestens eine Ion (6) oberhalb des offenen Endes (2a) der Resonatorelektrode (2) eingefangen wird.

7. Quantencomputervorrichtung (100) nach einem der vorhergehenden Ansprüche, wobei
- die planare Paul-Falle so eingerichtet ist, dass sie ein Ion (6) mit einem internen Übergang mit einer Übergangsenergie einfängt, die einer Übergangsfrequenz f_t entspricht,
- die Resonanzfrequenz f_t ± 10 % beträgt.

8. Quantencomputervorrichtung (100) nach einem der vorhergehenden Ansprüche, wobei
- die Länge der Resonatorelektrode (2) zwischen dem offenen Ende (2a) und dem Übergang (2b) n*c/(4*f_res) ± 10 % beträgt, wobei n eine ganze Zahl ≥ 1 ist, c die Lichtgeschwindigkeit in der Resonatorelektrode und f_res die Resonanzfrequenz ist.

9. Quantencomputervorrichtung (100) nach einem der vorhergehenden Ansprüche, wobei
- die Vielzahl von Windungen (20 bis 25) der Resonatorelektrode (2) alle in einer ersten Ebene (P_1) angeordnet sind,
- mindestens einige der Elektroden (30) der planaren Paul-Falle in einer zweiten Ebene (P_2) angeordnet sind,
- die zweite Ebene (P_2) und die erste Ebene (P_1) auf unterschiedlichen Höhen über der Oberseite (10) liegen, so dass sich die Vielzahl von Windungen (20 bis 25) der Resonatorelektrode (2) nicht mit der zweiten Ebene (P_2) schneidet und sich die in der zweiten Ebene (P_2) angeordneten Elektroden (30) der planaren Paul-Falle nicht mit der ersten Ebene (P_1) schneiden,
- die erste Ebene (P_1) zwischen der Oberseite (10) des Substrats (1) und der zweiten Ebene (P_2) angeordnet ist.

10. Quantencomputervorrichtung (100) nach Anspruch 9, wobei
- HF-Elektroden (30) der planaren Paul-Falle, die mit einer Wechselspannung zu versorgen sind, in der zweiten Ebene (P_2) angeordnet sind.

11. Quantencomputervorrichtung (100) nach einem der vorhergehenden Ansprüche, wobei
- das offene Ende (2a) zwischen zwei HF-Elektroden (30) der planaren Paul-Falle (3) in einer ersten lateralen Richtung (L1) angeordnet ist,
- das offene Ende (2a) zwischen zwei Gleichstromelektroden (31) der planaren Paul-Falle (3) in einer zweiten lateralen Richtung (L2) angeordnet ist, die senkrecht zur ersten lateralen Richtung verläuft.

12. Quantencomputervorrichtung (100) nach einem der vorhergehenden Ansprüche, wobei
- die Quantencomputervorrichtung (100) frei von jeglichem elektrisch leitenden Material in dem Raum zwischen dem offenen Ende (2a) und der Position ist, in der das mindestens eine Ion (6) eingefangen werden soll, so dass das oszillierende Magnetfeld das eingefangene Ion (6) erreichen kann, ohne abgeschirmt zu werden.

13. Quantencomputeranordnung, umfassend
- die Quantencomputervorrichtung (100) nach einem der vorhergehenden Ansprüche,
- einen Signalgenerator (200), der dazu eingerichtet ist, die Resonatorelektrode (2) mit einem elektrischen Wechselsignal mit der Resonanzfrequenz zu versorgen.

14. Quantencomputer (1000), umfassend die Quantencomputervorrichtung (100) nach einem der Ansprüche 1 bis 12 oder die Quantencomputeranordnung nach Anspruch 13 und eingerichtet zur Durchführung von Quantenberechnungen, wobei der Quantencomputer (1000) insbesondere ferner ein laserbasiertes Kühl- und/oder Auslesesystem umfasst.

15. Verfahren zum Betreiben der Quantencomputervorrichtung (100) nach einem der Ansprüche 1 bis 12, umfassend
- Versorgung der Resonatorelektrode (2) mit einem Wechselsignal, dessen Frequenz höchstens 10 % von der Resonanzfrequenz abweicht.

## Revendications

1. Dispositif informatique quantique (100), comprenant
- un substrat (1),
- une électrode résonatrice (2) fixée au substrat (1), dans lequel
- le dispositif informatique quantique (100) est configuré de manière à réaliser un piège de Paul planaire pour piéger au moins un ion (6),
- des composants (30, 31) du dispositif informatique quantique (100), constituant des électrodes (30, 31) du piège de Paul planaire destinées à produire un potentiel électrique de piégeage, sont agencés sur une face supérieure (10) du substrat (1),
- l'électrode résonatrice (2)
- comporte une pluralité de spires (20 à 25),
- comporte une extrémité ouverte (2a), chaque spire de la pluralité de spires (20 à 25) s'étendant autour de l'extrémité ouverte (2a),
- est réalisée sous la forme d'un résonateur pour une onde électromagnétique ayant une fréquence de résonance,
- présente une transition (2b) entre la spire la plus externe (25) de la pluralité de spires (20 à 25) de l'électrode résonatrice (2) et une ligne d'alimentation (26), avec un désaccord d'impédance caractéristique entre la ligne d'alimentation (26) et ladite spire la plus externe (25) au niveau de la transition (2b), de sorte qu'une onde électromagnétique ayant la fréquence de résonance est réfléchie alternativement entre l'extrémité ouverte (2a) et la transition (2b),
- lorsqu'elle est alimentée par un signal électrique alternatif ayant la fréquence de résonance, génère un champ magnétique oscillant à la position de l'au moins un ion piégé (6) afin d'induire une transition dans l'ion (6).

2. Dispositif informatique quantique (100) selon la revendication 1, dans lequel
- l'électrode résonatrice (2) est agencée sur la face supérieure (10) du substrat (1).

3. Dispositif informatique quantique selon la revendication 1 ou 2, dans lequel
- chaque spire (20 à 25) s'étend autour de l'extrémité ouverte (2a).

4. Dispositif informatique quantique (100) selon la revendication 3, dans lequel
- l'électrode résonatrice (2) comporte une spire la plus interne (20) de la pluralité de spires (20 à 25), débouchant dans l'extrémité ouverte (2a),
- la distance par rapport à l'extrémité ouverte (2a) augmente de manière monotone lorsque l'on se déplace le long de l'électrode résonatrice (2) depuis la spire la plus interne (20) jusqu'à la spire la plus externe (25) de la pluralité de spires (20 à 25) de l'électrode résonatrice (2).

5. Dispositif informatique quantique (100) selon la revendication 4, dans lequel
- la pluralité de spires (20 à 25) de l'électrode résonatrice (2) forme une spirale rectangulaire.

6. Dispositif informatique quantique (100) selon l'une quelconque des revendications 1 à 5, dans lequel
- le dispositif informatique quantique (100) est configuré de telle sorte que l'au moins un ion (6) est piégé au-dessus de l'extrémité ouverte (2a) de l'électrode résonatrice (2).

7. Dispositif informatique quantique (100) selon l'une quelconque des revendications précédentes, dans lequel
- le piège de Paul planaire est configuré pour piéger un ion (6) présentant une transition interne avec une énergie de transition correspondant à une fréquence de transition f_t,
- la fréquence de résonance est égale à f_t ± 10 %.

8. Dispositif informatique quantique (100) selon l'une quelconque des revendications précédentes, dans lequel
- la longueur de l'électrode résonatrice (2) entre l'extrémité ouverte (2a) et la transition (2b) est égale à n*c/(4*f_res) ± 10 %, où n est un entier ≥ 1, c est la vitesse de la lumière dans l'électrode résonatrice et f_res est la fréquence de résonance.

9. Dispositif informatique quantique (100) selon l'une quelconque des revendications précédentes, dans lequel
- la pluralité de spires (20 à 25) de l'électrode résonatrice (2) est entièrement agencée dans un premier plan (P_1),
- au moins certaines des électrodes (30) du piège de Paul planaire sont agencées dans un deuxième plan (P_2),
- le deuxième plan (P_2) et le premier plan (P_1) sont situés à des hauteurs différentes au-dessus de la face supérieure (10), de sorte que la pluralité de spires (20 à 25) de l'électrode résonatrice (2) ne coupe pas le deuxième plan (P_2) et que les électrodes (30) du piège de Paul planaire agencées dans le deuxième plan (P_2) ne coupent pas le premier plan (P_1),
- le premier plan (P_1) est agencé entre la face supérieure (10) du substrat (1) et le deuxième plan (P_2).

10. Dispositif informatique quantique (100) selon la revendication 9, dans lequel
- des électrodes RF (30) du piège de Paul planaire destinées à être alimentées par une tension alternative sont agencées dans le deuxième plan (P_2).

11. Dispositif informatique quantique (100) selon l'une quelconque des revendications précédentes, dans lequel
- l'extrémité ouverte (2a) est agencée entre deux électrodes RF (30) du piège de Paul planaire (3) suivant une première direction latérale (L1),
- l'extrémité ouverte (2a) est agencée entre deux électrodes à courant continu (31) du piège de Paul planaire (3) suivant une deuxième direction latérale (L2) perpendiculaire à la première direction latérale.

12. Dispositif informatique quantique (100) selon l'une quelconque des revendications précédentes, dans lequel
- le dispositif informatique quantique (100) est dépourvu de tout matériau électriquement conducteur dans l'espace situé entre l'extrémité ouverte (2a) et la position à laquelle l'au moins un ion (6) doit être piégé, de sorte que le champ magnétique oscillant puisse atteindre l'ion piégé (6) sans être blindé.

13. Ensemble informatique quantique, comprenant
- le dispositif informatique quantique (100) selon l'une quelconque des revendications précédentes,
- un générateur de signaux (200) configuré pour alimenter l'électrode résonatrice (2) avec un signal électrique alternatif ayant la fréquence de résonance.

14. Ordinateur quantique (1000) comprenant le dispositif informatique quantique (100) selon l'une quelconque des revendications 1 à 12 ou l'ensemble informatique quantique selon la revendication 13 et configuré pour effectuer des calculs quantiques, l'ordinateur quantique (1000) comprenant notamment en outre un système de refroidissement et/ou de lecture à base de laser.

15. Procédé de fonctionnement du dispositif informatique quantique (100) selon l'une quelconque des revendications 1 à 12, comprenant
- l'alimentation de l'électrode résonatrice (2) avec un signal alternatif dont la fréquence diffère d'au plus 10 % de la fréquence de résonance.
